# EUROPEAN PATENT APPLICATION

(11) **EP 4 582 989 A1**
(43) Date of publication of application: **09.07.2025**
(21) Application number: 25150036.9
(22) Date of filing: 02.01.2025
(51) Int. Cl.: G06F 21/85, G06F 21/60, G06F 21/79, G06F 13/00, G06F 13/40

(54) **HARDWARE SECURITY MODULE AND CONTROLLER**

(30) Priority: 03.01.2024 CN 202410008916
(71) Applicant: GigaDevice Semiconductor Inc., Haidian, Beijing (CN)
(72) Inventor: Gao, Yang, Beijing (CN)
(74) Representative: dompatent von Kreisler Selting Werner - Partnerschaft von Patent- und Rechtsanwälten mbB

(57) **Abstract**

The present invention provides an HSM (10) and a controller. The HSM (10) includes an HSM bus matrix (100) and, connected to the HSM bus matrix (100), a plurality of HSM master modules, an HSM external bus port (106), an HSM SRAM (104) and a plurality of HSM slave modules. The HSM master modules include an HSM CPU core (101) and an HSM DMA (102). The HSM slave modules include at least one encryption/decryption engine module (105a, 105b, 105c). The HSM (10) of the present invention complies with the Evita standard, and through storing sensitive information in the HSM SRAM (104) or the like, provides secure execution and storage. Not only data isolation between the HSM (10) and an external host, and hence protection of sensitive information, can be provided, the use of the HSM DMA (102) allows the HSM CPU core (101) to be offloaded from heavy data movement, thereby enhancing operating efficiency of the HSM CPU core (101).

## Description

### TECHNICAL FIELD

The present invention relates to the field of chip architectures and, in particular, to a hardware security module (HSM) and a controller.

### BACKGROUND

The advancement of science and technology, especially the continuous development of automobile intelligence and connectivity and the Internet of Things (IoT), has brought about a surge in the likelihood and risk of unauthorized external access to various electronic devices, increasingly threatening the security of various user data and assets. This imposes more stringent requirements on the information security protection capabilities of automotive electronic control units (ECUs) and other like controllers.

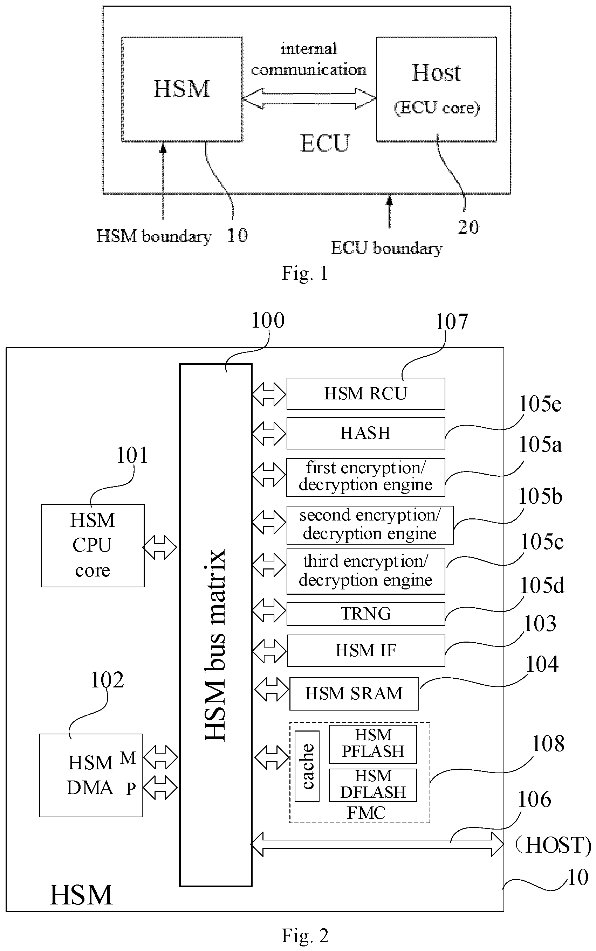

In order to develop a hardware-based security mechanism as a solution to the above problem, pertinent associations and organizations in the automotive field have formulated the E-safety Vehicle Intrusion Protected Applications (EVITA) standard for hardware security modules (HSMs) that serve as roots of trust on the basis of research on HSMs. Specifically, Fig. 1 shows an HSM 10 integrated in an ECU, which is independent from an application core (i.e., host) 20 of the ECU and is responsible for performing all cryptographic applications including symmetric key-based encryption and decryption, integrity checking, asymmetric key-based encryption and decryption, digital signature generation and verification, secure booting and random number generation functions for security applications. The Evita standard categorizes HSMs into three levels: light, medium and full, and specifies hardware modules necessary for each level of HSMs. The light HSM architecture simply incorporates an AES-128 symmetric encryption/decryption engine module as an encryption/decryption engine module for providing internal data protection of components and addressing the strict requirements of sensors and actuators in terms of cost and efficiency (packet size, time, protocol constraints, processor capabilities, etc.). In comparison with the light HSM architecture, the medium HSM architecture additionally incorporates an AES-based pseudo random number generator (AES-PRNG) with a true random number generator (TRNG) seed for protecting data communication between components, which can perform non-real-time, asymmetric soft encryption tasks, such as establishing shared keys. Compared with the medium HSM architecture, the full HSM architecture adds an ECC-256-GF asymmetric encryption/decryption engine module and a hash module that assists in encryption and decryption calculations. These modules are incorporated to protect communication of components with gateways or external interface devices. At each level of architecture, the HSM can be connected to the ECU's host (application core) only by a hardware interface, thereby providing isolation of internal data of the HSM 10 from data on the host 20. Thus, storage of sensitive information (e.g., cryptographic keys, information about user privacy, etc.) on the HSM 10 can strengthen the ECU's information security protection power.

Although the Evita standard has specified the hardware modules required by the various levels of HSMs, it does not provide any information regarding how these hardware modules can be organized and integrated. Therefore, it has become one of the focuses of research efforts in the art to develop a secure and efficient HSM architecture in compliance with the Evita standard.

### SUMMARY

It is an objective of the present invention to provide an HSM and a controller, which complies with the Evita standard and provide sensitive information protection and enhanced HSM operating efficiency.

To this end, the HSM includes:
an HSM bus matrix;
a plurality of HSM master modules connected to a master side of the HSM bus matrix and including an HSM CPU core and an HSM DMA, the HSM DMA configured for data movement within the HSM and data movement between the HSM and a corresponding module in a host, the HSM CPU core configured to process associated data and configure the HSM DMA;
an HSM SRAM and a plurality of first HSM slave modules, which are all connected to a slave side of the HSM bus matrix, the HSM SRAM configured to store sensitive information, the first HSM slave modules including at least one encryption/decryption engine module each configured to provide a respective encryption/decryption algorithm; and
an HSM external bus port, one side of which is connected to the slave side of the HSM bus matrix, and the other side is connected to a master side of a host bus matrix of the host, wherein both the HSM CPU core and the HSM DMA act as host master modules of the host, which are capable of accessing corresponding resources in the host via the HSM bus matrix and the HSM external bus port.

Compared with the prior art, the HSM architecture design of present invention includes an HSM bus matrix and, all connected to the HSM bus matrix, a plurality of HSM master modules, an HSM SRAM and a plurality of first HSM slave modules. The HSM master modules include an HSM CPU core and an HSM DMA, and the first HSM slave modules include at least one encryption/decryption engine module. The HSM of the present invention complies with the Evita standard and stores sensitive information (e.g., cryptographic keys, information about user privacy, etc.) in the HSM SRAM or the like. This enables secure execution and storage, as well as data isolation between the HSM and an external host. That is, protection of sensitive information is achieved. Moreover, through configuring both the HSM DMA and the HSM CPU core as HSM master modules connected to the HSM bus matrix, data exchange is made possible between the HSM DMA and the host through the HSM external bus port, thereby offloading the HSM CPU core from heavy data movement and enhancing operating efficiency of the HSM CPU core.

Optionally, the HSM DMA may include an HSM DMA controller and an HSM DMA arbiter, the HSM DMA controller sharing the HSM bus matrix with the HSM CPU core and having a plurality of channels each dedicated to management of one or more requests for access to a memory of the HSM, the HSM DMA arbiter configured for priority management of the memory access requests. With this arrangement, the HSM DMA can perform data movement tasks within the HSM according to the priority of associated access requests. Moreover, movement of various plaintext and ciphertext between, and storage thereof in, the HSM and the host can be achieved.

Optionally, permitted access to the HSM bus matrix may be determined by round-robin scheduling, wherein when the HSM DMA and the HSM CPU core are to access the same destination in the memory, access of the HSM DMA to the HSM bus matrix disrupts access of the HSM CPU core to the HSM bus matrix in some bus cycles. With this arrangement, in addition to ensuring that at least half the system bus bandwidth is taken up by the HSM CPU core, implementing round-robin scheduling in the HSM bus matrix enables data movement to and from the HSM DMA, thus ensuring appropriate operation of the HSM.

Optionally, the host may include an FMC, one side of which is connected to the slave side of the HSM bus matrix, and the other side is connected to a slave side of the host bus matrix, the FMC having a dedicated flash memory area assigned to the HSM and configured for non-volatile storage of the sensitive information or running of security code. With this arrangement, although the FMC is actually built in the host, the latter is not able to access the dedicated flash memory area in the FMC. This realizes data isolation between the HSM and the host. Moreover, the HSM is capable of non-volatile storage of proper sensitive information and running of security code in the dedicated flash memory area of the FMC.

Optionally, the dedicated flash memory area may include at least one of a program region (HSM PFLASH), a data region (HSM DFLASH) and a cache region. With this arrangement, the dedicated flash memory area in the FMC can be further partitioned for authority control and usage optimization, which can enhance efficiency of the HSM in operating programs and allow more secure storage of sensitive information.

Optionally, when an interrupt for the HSM is set, the HSM DMA may move data to be processed from the host to the HSM SRAM or to a corresponding one of the encryption/decryption engine module(s) via the HSM external bus port. During the movement of the data to be processed, the HSM CPU core may perform other transactions. After the movement of the data to be processed is completed, the HSM CPU core may activate the encryption/decryption engine module and thereby obtain encrypted ciphertext or decrypted plaintext, followed by movement of the ciphertext or plaintext by the HSM DMA to the host via the HSM external bus port. Optionally, after the movement of the ciphertext or plaintext is completed, the HSM CPU core may set the interrupt for the host.

Optionally, the plurality of first HSM slave modules may further include a hardware interface module (HSM IF), which is connected to the slave side of the host bus matrix and configured for exchange of associated information between the HSM and the host.

Optionally, the HSM IF may contain a function register configured to exchange the associated information (e.g., flags) between the HSM and the host and/or to set interrupts for the HSM and the host. With this arrangement, through using the HSM IF, various types of information, such as flags, can be exchanged between the HSM and the host, and interrupts can be set for the HSM and the host.

Optionally, the HSM may be implemented as a whole, as a power domain, wherein when the entire HSM is powered down, it enters a low power mode at the lowest power level. With this arrangement, the HSM can be separately shut down to a low-power state at the lowest power level.

Optionally, the plurality of first HSM slave modules may further include an HSM RCU module for controlling clocks and reset of the first HSM slave modules and the HSM master modules, the HSM RCU module including a clock gating unit configured to shut down, when the HSM is normally supplied with power, depending on various power needs, at least one of the other modules in the HSM rather than the HSM CPU core, thereby creating low power modes at different power levels. With this arrangement, the power-down control of the clock gating unit allows turning off HSM slave modules out of use, reducing the frequencies of operating clocks and shutting down most clocks in the HSM, thereby switching the HSM into various low power modes at different power levels.

Optionally, the clock gating unit may include a clock driver circuit and a plurality of cascaded gating circuits, the clock driver circuit including an input terminal coupled to a system clock signal provided by the host, the clock driver circuit including an output terminal coupled to an input terminal of a first one of the gating circuits, which serves as a first gating stage, the first gating stage including a first output terminal coupled to a power supply terminal of the HSM CPU core, the first gating stage including a second output terminal coupled to an output terminal of a second one of the gating circuits, which serves as a second gating stage, each of the second and any succeeding one of the gating circuits, which serves as a respective gating stage, including an input terminal coupled to the or a first output terminal of an immediately preceding one of the gating circuits, the second and any remaining output terminals of each gating circuit coupled to a power supply terminal of a respective HSM peripheral, the first to last gating stages each including an enable terminal coupled to a respective different internal clock signal in the HSM. With this arrangement, the clock gating unit can be provided by a simple circuit, resulting in reduced circuit cost.

Optionally, the host may be provided therein with a tri-state buffer and a PMU, the tri-state buffer including an input terminal coupled to a power supply for supplying power to the HSM, the tri-state buffer including an output terminal coupled to a system power supply terminal of the HSM, the tri-state buffer including an enable terminal coupled to an output terminal of the PMU, the tri-state buffer, when enabled by the PMU, allowing the power supply to normally supply power to the entire HSM, the tri-state buffer, when disabled by the PMU, allowing the entire HSM to be shut down. With this arrangement, normal power supply and complete shutdown of the entire HSM can be achieved with a simple circuit.

Optionally, the HSM bus matrix may support a first communication bus protocol (AHB), wherein the HSM further includes a first communication bus, one side of which is connected to the slave side of the HSM bus matrix, and the first HSM slave modules all support the first communication bus protocol and are all connected to the other side of the first communication bus. With this arrangement, the HSM bus matrix and the first communication bus together provide a dual-bus architecture, which can reduce difficulties in design of the HSM bus matrix. Moreover, with the first communication bus, all the other first HSM slave modules than the HSM SRAM (which can be referred to as "peripherals" of the HSM CPU core) can commonly share a single slave port of the HSM bus matrix. This can prevent these first HSM slave modules from competing with the HSM SRAM for use of a slave port, resulting in more efficient access to the HSM SRAM and hence higher operating efficiency of programs in the HSM.

Alternatively or additionally, the HSM may further include:
a first bus translation bridge, one side of which is connected to the slave side of the HSM bus matrix or to the other side of the first communication bus, and which is configured for translation between a second communication bus protocol and the first communication bus protocol; and
a second communication bus supporting the second communication bus protocol, one side of which is connected to the other side of the first bus translation bridge, wherein a plurality of second HSM slave modules all support the second communication bus protocol and are all connected to the other side of the second communication bus,
wherein the second communication bus protocol is different from the first communication bus protocol, and the HSM SRAM is directly connected to the slave side of the HSM bus matrix.

With this arrangement, the protocol translation capabilities of the first bus translation bridge enable the second HSM slave modules that support the second communication bus protocol to be integrated in the HSM, making the HSM more powerful.

Optionally, the HSM bus matrix may support a third communication bus protocol, wherein the HSM further includes
a second bus translation bridge, one side of which is connected to the slave side of the HSM bus matrix, and which is configured for translation between a first communication bus protocol and the third communication bus protocol;
a first communication bus supporting the first communication bus protocol, one side of which is connected to the other side of a first bus translation bridge, wherein the first HSM slave modules all support the first communication bus protocol and are all connected to the other side of the first communication bus;
the first bus translation bridge, one side of which is connected to the other side of the first communication bus, and which is configured for translation between the first communication bus protocol and a second communication bus protocol; and
a second communication bus supporting the second communication bus protocol, one side of which is connected to the other side of the first bus translation bridge, wherein a plurality of second HSM slave modules all support the second communication bus protocol and are all connected to the other side of the second communication bus,
wherein the first communication bus protocol, the second communication bus protocol and the third communication bus protocol are different from one another, and the HSM SRAM is directly connected to the slave side of the HSM bus matrix.

With this arrangement, the protocol translation capabilities of the first and second bus translation bridges make the HSM compatible with the three different communication bus protocols and thus more powerful.

Optionally, the plurality of first HSM slave modules may further include at least one of:
a TRNG module for generating various cryptographic keys required by encryption and decryption;
a hash module for utilizing a hash algorithm to assist in encryption and decryption calculations performed by an appropriate one of the encryption/decryption engine module(s).

Alternatively or additionally, the plurality of second HSM slave modules may include at least one of:
at least one HSM timer for providing clocks required by the HSM slave and master modules; and
an HSM WWDG for monitoring operation of the HSM CPU core.

On the basis of the same inventive concept, the present invention also provides a controller, which includes a host and the HSM as defined above. The HSM and the host are integrated in a single chip. With this arrangement, the controller is of a secure, efficient architecture, which provides data isolation between the HSM and the host. Moreover, the HSM can access almost all the resources in the host, including various memories and peripherals, while the host cannot access sensitive information stored in the HSM.

Optionally, the host may include a host bus matrix, a plurality of host master modules and a plurality of host slave modules, the plurality of host master modules connected to a master side of the host bus matrix and including a host CPU core and the HSM, the plurality of host slave modules connected to a slave side of the host bus matrix and including a host SRAM for storing data, the host CPU core configured to process associated data and configure the host master and slave modules. With this arrangement, a controller chip can be obtained by integrating the HSM, as a host master module, into a chip together with the host bus matrix, the host slave modules and the other host master modules.

Optionally, the controller may be an automotive ECU. With this arrangement, since the automotive ECU employs the inventive HSM, its sensitive information (e.g., cryptographic keys, information about user privacy, etc.) can be stored in the HSM so as to be isolated from data on the host. In this way, sensitive data in the automotive ECU can be protected from potential threats and attacks, guaranteeing driving safety of the vehicle, for example.

### BRIEF DESCRIPTION OF THE DRAWINGS

Those of ordinary skill in the art would appreciate that the accompanying drawings are provided to facilitate a better understanding of the present invention and do not limit the scope thereof in any sense, in which:
Fig. 1 is a schematic diagram showing a relationship between an HSM and a host in an ECU in compliance with the Evita standard;
Fig. 2 is a schematic diagram showing an architecture design for an HSM according to a first embodiment of the present invention;
Fig. 3 is a schematic diagram showing the structure of an RCU module in the HSM according to the first embodiment of the present invention;
Fig. 4 is a schematic flowchart of an encryption/decryption process performed between the HSM and the host according to the first embodiment of the present invention;
Fig. 5 is a schematic flowchart of a secure booting process of a system performed by the HSM according to the first embodiment of the present invention;
Fig. 6 is a schematic diagram showing an architecture design for an HSM according to a second embodiment of the present invention;
Fig. 7 is a schematic diagram showing an architecture design for an HSM according to a third embodiment of the present invention;
Fig. 8 is a schematic diagram showing an architecture design for an HSM according to a fourth embodiment of the present invention;
Fig. 9 is a schematic diagram showing an architecture design for an HSM according to a fifth embodiment of the present invention;
Fig. 10 is a schematic diagram showing an architecture design for an HSM according to a sixth embodiment of the present invention; and
Fig. 11 is a schematic diagram showing an architecture design for a controller according to a seventh embodiment of the present invention.

### DETAILED DESCRIPTION

The following description sets forth numerous specific details in order to provide a more thorough understanding of the present invention. However, it will be apparent to those skilled in the art that the present invention can be practiced without one or more of these specific details. In other instances, well-known technical features have not been described in order to avoid unnecessary obscuring of the invention. It is to be understood that the invention may be embodied in many different forms and should not be construed as being limited to the embodiments set forth below. Rather, these embodiments are provided so that this disclosure is thorough and conveys the scope of the invention to those skilled in the art. In the drawings, like reference numerals refer to like elements throughout. It will be understood that when an element is referred to as being "connected to" or "coupled to" another element, it can be directly connected or coupled to the other element, or intervening elements may also be present. In contrast, when an element is referred to as being "directly connected to" another element, there are no intervening elements. As used herein, the singular forms "a", "an" and "the" are intended to include the plural forms as well, unless the context clearly indicates otherwise. It will be further understood that the term "including" specifies the presence of stated features, steps, operations, elements, and/or components, but do not preclude the presence or addition of one or more other features, steps, operations, elements, components, and/or groups thereof. As used herein, the term "and/or" includes any and all combinations of the associated listed items. As used herein, the term "master module" refers to a bus master module that can actively initiate an access request, and the term "slave module" refers to a bus slave module that passively receives an access request and returns a response to the request.

### EMBODIMENT 1

Referring to Fig. 2 is a schematic diagram showing a hardware security module (referred to hereinafter as the "HSM") 10 according to an embodiment of the present invention. The HSM 10 includes an HSM bus matrix 100, a plurality of HSM master modules, an HSM SRAM 104 (acting as a dedicated cache for the HSM), a plurality of first HSM slave modules and an HSM external bus port 106, which all support a first communication bus protocol. The first communication bus protocol may be any suitable bus communication protocol such as AHB or AXI.

The HSM bus matrix 100 is configured to provide bus interconnection between various modules in the HSM 10.

The HSM master modules are connected to a master side of the HSM bus matrix 100 and include an HSM CPU core 101 and an HSM DMA (Direct Memory Access) 102.

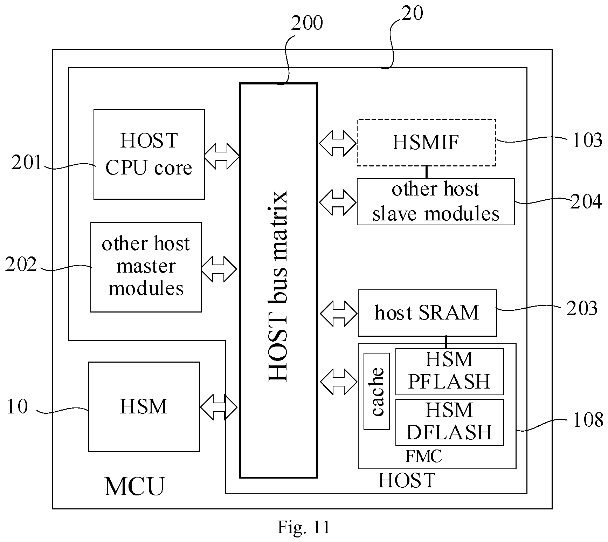

Referring to Figs. 2 and 11, the HSM DMA 102 is configured for data movement within the HSM 10 and data movement of various plaintext and ciphertext between the HSM 10 and corresponding host modules (e.g., the host CPU core 201 and the host SRAM 203 of Fig. 11, etc.) in a host (deployed outside the HSM 10, e.g., the host 20 of Fig. 11) for storage therein. This can relieve the load of the HSM CPU core 101.

Optionally, the HSM DMA 102 may include an HSM DMA controller (not shown) and an HSM DMA arbiter (not shown). The HSM DMA controller may share the HSM bus matrix 100 with the HSM CPU core 101. There may be a plurality of channels in the HSM DMA controller, each dedicated to management of one or more requests for access to a memory of the HSM 10. For example, the access requests may be requests for access to the HSM SRAM 104, or to a memory of the host (e.g., the host 20 of Fig. 11) that it shares with the HSM 10. The HSM DMA arbiter is configured for priority management of such memory access requests.

Optionally, permitted access to the HSM bus matrix 100 may be determined by round-robin scheduling, and when the HSM DMA 102 and the HSM CPU core 101 are to access the same destination in the memory of the HSM 10 (i.e., the HSM SRAM) or in the shared memory of the host (e.g., the host 20), the access of the HSM DMA 102 to the HSM bus matrix 100 may disrupt the access of the HSM CPU core 101 to the HSM bus matrix 100 in some bus cycles. Thus, in addition to ensuring that at least half the system bus bandwidth is taken up by the HSM CPU core 101, implementing round-robin scheduling in the HSM bus matrix enables data movement to and from the HSM DMA, ensuring appropriate operation of the HSM.

The HSM CPU core 101 may be selected as any suitable CPU core, such as a 32-bit RISC (Reduced Instruction Set Computer) CPU (Central Processing Unit) core. The HSM DMA 102, the HSM SRAM 104, the HSM external bus port 106 and the first HSM slave modules may be all considered as peripherals of the HSM CPU core 101. In addition to processing data within, transmitted from and received at the HSM 10, the HSM CPU core 101 may also be configured to configure the HSM DMA 102, the HSM SRAM 104, the HSM external bus port 106 and the first HSM slave modules.

In this embodiment, the first HSM slave modules are directly connected to a slave side of the HSM bus matrix 100 and include a hardware interface module ("HSM IF") 103, a first encryption/decryption engine module 105a, a second encryption/decryption engine module 105b, a third encryption/decryption engine module 105c, a true random number generator module ("TRNG") 105d, a hash module ("HASH") 105e and an HSM reset control unit module ("HSM RCU") 107. In other embodiments of the present invention, the first HSM slave modules may include some of the first encryption/decryption engine module 105a, the second encryption/decryption engine module 105b, the third encryption/decryption engine module 105c, the TRNG 105d, the HASH 105e and the HSM RCU 107, if so desired. In this embodiment, the HSM bus matrix 100, the HSM master modules, the HSM SRAM 104, the HSM external bus port 106 and the first HSM slave modules all support the first communication bus protocol, which may be any suitable communication bus protocol such as AHB, without limiting the invention in any way.

With combined reference to Figs. 2 and 11, the HSM IF 103 is integrated in the HSM 10 and has two bus slave ports (not shown), one of which is connected to the slave side of the HSM bus matrix 100, and the other is connected to a slave side of a host bus matrix 200 of the host 20. Thus, it acts as both an HSM slave module of the HSM 10 and a host slave module of the host 20. The HSM IF 103 may contain a function register (not shown) for information (e.g., flags) interaction between the HSM 10 and the host 20.

Optionally, the function register in the HSM IF 103 may also be used to set interrupts for the HSM and the host. Thus, the HSM IF 103 can provide some of the system control functionality of the HSM 10.

The HSM SRAM 104 is a static random-access memory (SRAM) dedicated to the HSM 10, which can store, for example, sensitive information such as cryptographic key and information regarding user privacy. The host 20 is prevented from accessing the HSM SRAM 104, thus providing data isolation between the HSM 10 and the host 20.

Referring to Fig. 2, the first encryption/decryption engine module 105a, the second encryption/decryption engine module 105b and the third encryption/decryption engine module 105c support different encryption/decryption algorithms. For example, the first encryption/decryption engine module 105a may be a symmetric encryption/decryption engine module that supports at least one symmetric encryption algorithm such as DES, 3DES or AES, the second encryption/decryption engine module 105b may be an asymmetric encryption/decryption engine module that supports at least one asymmetric encryption algorithm such as RSA, PKA or ECC, and the third encryption/decryption engine module 105c may be a Chinese Commercial Cryptographic Algorithm (CCCA) encryption/decryption engine module that at least one CCCA algorithm such as SM2, SM3 or SM4. In this way, one or more types of encryption/decryption engine modules are used to encrypt data that the HSM 10 transmits to the host 20 and decrypt the data that the HSM 10 receives. In other embodiments of the present invention, only one or two of the first encryption/decryption engine module 105a, the second encryption/decryption engine module 105b and the third encryption/decryption engine module 105c may be included.

The TRNG 105d is configured to generate various cryptographic keys and the like required by encryption and decryption.

The HASH 105e is configured to utilize a hash (or digest) algorithm to assist in encryption and decryption calculations performed by an encryption/decryption engine module (e.g., the first encryption/decryption engine module 105a, the second encryption/decryption engine module 105b, or the third encryption/decryption engine module 105c).

With combined reference to Figs. 2 and 11, the HSM external bus port 106 serves as a bus port allowing the HSM 10 to access the host 20. One end of the HSM external bus port 106 is connected to the slave side of the HSM bus matrix 100, and the other end is connected to a master side of the host bus matrix 200. Both the HSM CPU core 101 and the HSM DMA 102 can act as host master modules of the host 20 to access almost all the resources in the host 20 via the HSM bus matrix 100 and the HSM external bus port 106. By virtue of both the HSM DMA 102 and the HSM CPU core 101 also acting as HSM master modules of the HSM bus matrix 100, the HSM DMA 102 can perform data exchange with the host 20 via the HSM external bus port 106 to offload the HSM CPU core 101 from heavy data movement, enhancing operating efficiency of the HSM CPU core 101.

In this embodiment, the HSM 10 can be taken, as a whole, as a power domain that can be separately turned off. The HSM RCU 107 is configured for clock and reset control of the entire system of the HSM 10 and various HSM peripherals 115 of the HSM CPU core 101 (i.e., the HSM DMA 102, HSM SRAM 104, HSM external bus port 106 and other HSM slave modules). In this way, different levels of low-power states of the HSM 10 can be achieved with the aid of system clock off-control of the HSM RCU 107.

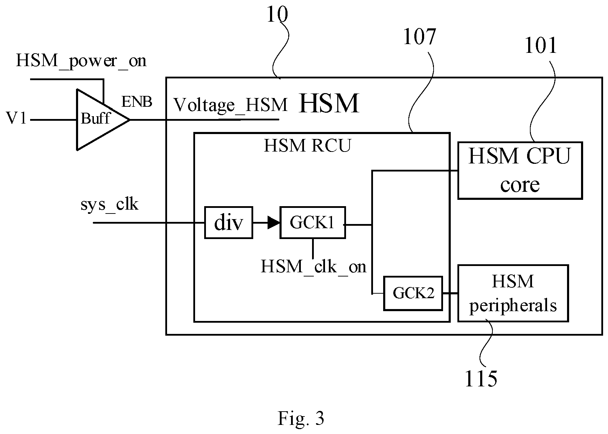

Optionally, referring to Fig. 3, the host 20 may be provided therein with a tri-state buffer Buff and a power manage unit (PMU, not shown). An input terminal of the tri-state buffer Buff is coupled to a power supply V1 for supplying power to the HSM 10. An output terminal of the tri-state buffer Buff is coupled to a system power supply terminal of the HSM 10. An enable terminal of the tri-state buffer Buff is coupled to an output terminal of the PMU to allow the tri-state buffer to be enabled or disabled under the control of a power up/down signal HSM_power _on from the PMU for powering on/off the entire HSM 10.

Additionally, with combined reference to Figs. 2, 3 and 11, the other modules in the HSM 10 than the HSM RCU 107 and the HSM CPU core 101 (i.e., the HSM DMA 102, HSM SRAM 104, HSM external bus port 106 and other HSM slave modules) may be considered as HSM peripherals 115 of the HSM CPU core 101. When the power up/down signal HSM_power_on from the PMU in the host 20 is invalid (e.g., "0"), the tri-state buffer Buff is disabled, cutting off the output of the tri-state buffer Buff (i.e., cutting off a power signal Voltage HSM required for operation of the HSM 10). As a result, the entire HSM 10 is powered down into the lowest power mode ("deep sleep") in which all volatile data in the HSM 10 is lost. In order to quit this mode, a software program in the HSM 10 (e.g., store in a PFLASH of an FMC 108) must be re-executed by the HSM CPU core 101. If the power up/down signal HSM_power_on from the PMU in the host 20 is valid, the tri-state buffer Buff is enabled to output a normal logic state, allowing normal power supply to the HSM 10 with the power signal Voltage_HSM. In this way, with the tri-state buffer Buff, normal power supply to the entire HSM and complete shutdown thereof can be achieved.

Optionally, the HSM RCU 107 may have a clock gating unit (not shown), which is coupled to power supply terminals of the HSM CPU core 101 and the HSM peripherals 115. When the power up/down signal HSM_power_on is valid (e.g., "1"), the power signal Voltage_HSM normally powers the system of the entire HSM 10. In this way, the clock gating unit of the HSM RCU 107 can turn off some HSM peripherals 115 out of use, reduce the frequencies of operating clocks and shut down some circuits in the HSM RCU 107, thus switching the system into various low power modes at different power levels. Operation of the HSM 10 in these low power modes can extend the battery life of an electronic product in which the HSM 10 and the host 20 are employed. Moreover, volatile data can be maintained in the low power modes, dispensing with the need for re-executing the software program by the HSM CPU core 101 when quitting the low power modes.

The clock gating unit of the HSM RCU 107 may be implemented as any suitable circuit, and the present invention is not limited to any particular such circuit. For example, referring to Fig. 3, the clock gating unit of the HSM RCU 107 may include a clock driver circuit div and at least two cascaded gating stages provided by respective gating circuits. An input terminal of the clock driver circuit div may receive a system clock signal sys_clk from the host 20, and an output terminal of the clock driver circuit div may be coupled to an input terminal of a first gating stage GCK1. A first output terminal of the first gating stage GCK1 may be coupled to the power supply terminal (not shown) of the HSM CPU core 101, and a second output terminal of the first gating stage GCK1 may be coupled to an output terminal of a second gating stage GCK2. An input terminal of each of the second GCK2 and any succeeding gating stage may be coupled to a first output terminal of the immediately preceding gating stage. Second and any remaining output terminals of each gating circuit may be coupled to a respective HSM peripheral 115. Enable terminals of the first to last gating stages GCK1 may be each coupled to a different clock signal within the HSM 10. In this way, the internal clock signals can be used to turn off the respective gating stages and hence the clocks of the respective HSM peripherals 115, thereby creating various low power modes at different power levels. For example, the enable terminal of the first gating stage GCK1 may be coupled to an internal clock signal HSM_clk_on in the HSM 10, and when the internal clock signal HSM_clk_on is invalid, nothing may be output from the second output terminal of the first gating stage GCK1. With this arrangement, the cascaded gating stages can turn off the clocks of all or almost all of the HSM peripherals 115 in the HSM 10, creating a low power mode at a power level slightly higher than the lowest power level.

Referring to Figs. 2 and 11, the host 20 further includes a flash memory controller ("FMC") 108, which is physically integrated in the host 20 and has two bus slave ports (not shown), one of which is coupled to the slave side of the HSM bus matrix 100, and the other is coupled to the slave side of the host bus matrix 200 of the host 20. Thus, the FMC 108 serves as both an HSM slave module of the HSM 10 and a host slave module of the host 20. The FMC 108 also has a dedicated flash memory area assigned to the HSM 10, which is configured for non-volatile storage of associated sensitive information or running of security code. The host 20 is prevented from accessing the dedicated flash memory area, providing data isolation.

Optionally, the dedicated flash memory area of the FMC 108 assigned to the HSM 10 may be further partitioned into a program region HSM PFLASH and a data region HSM DFLASH. The program region HSM PFLASH may be configured for storage of a software program to be executed by the HSM 10, and the data region HSM DFLASH may be configured for storage of sensitive information such as cryptographic keys of the HSM 10. Optionally, the dedicated flash memory area of the FMC 108 assigned to the HSM 10 may also have a cache region for enhancing operating efficiency of programs stored in the FMC 108. Thus, authority control and usage optimization can be affected on different regions of the FMC 108.

Optionally, when an interrupt for the HSM 10 is set, the HSM DMA 102 may move data necessary to be processed for this purpose from the host 20 to the HSM SRAM 104 or to an appropriate one of the encryption/decryption engine modules 105a-c through the HSM external bus port 106. During the movement of the data, the HSM CPU core 101 may perform other transactions. After the data movement is completed, the HSM CPU core 101 may activate the encryption/decryption engine module (e.g., one of 105a-105c of Fig. 2) and obtain encrypted ciphertext or decrypted plaintext therefrom. The HSM DMA 102 may then move the ciphertext or plaintext to the host 20 through the HSM external bus port 106. Optionally, after the ciphertext or plaintext movement is completed, the HSM CPU core 101 may set an interrupt for the host 20.

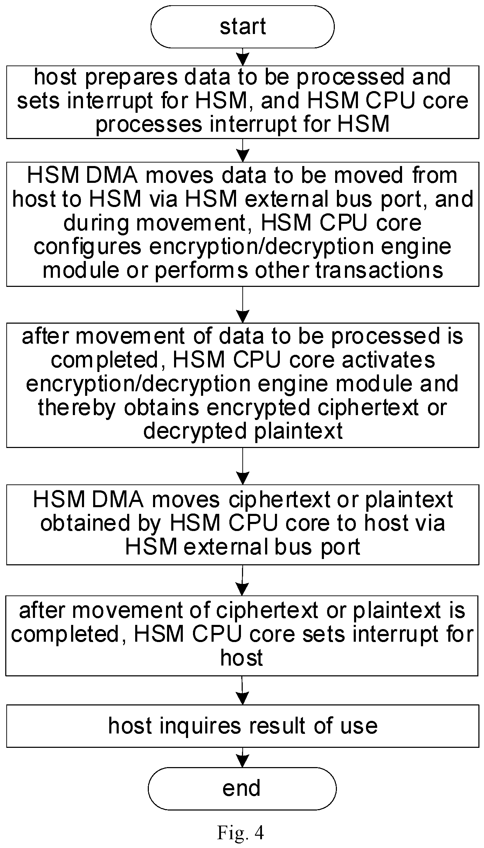

An encryption/decryption process that can be implemented by the HSM 10 of the architecture according to the present embodiment as discussed above will be described in detail below with reference to Figs. 2, 4 and 11.

At first, the host 20 prepares data to be processed (e.g., plaintext to be encrypted, or ciphertext to be decrypted) and sets the interrupt for the HSM 10 by writing it into the function register (not shown) in the HSM IF 103.

Next, the HSM CPU core 101 of the HSM 10 processes the interrupt and calls the HSM DMA 102. In response, the HSM DMA 102 moves the data to be processed from the host 20 to the HSM SRAM 104 or an appropriate one of the encryption/decryption engine modules 105a-105c via the HSM bus matrix 100 and the HSM external bus port 106. During the movement of the data to be processed by the HSM DMA 102, the HSM CPU core 101 may perform in parallel other transactions (e.g., the HSM CPU core 101 may configure the encryption/decryption engine modules in this course). After the HSM DMA 102 completes the movement of the data to be processed, the HSM CPU core 101 activates the encryption/decryption engine module and obtains the encrypted ciphertext or decrypted plaintext therefrom. The ciphertext or plaintext obtained by the HSM CPU core 101 from the encryption/decryption engine module may be stored in the HSM SARM 104.

The HSM CPU core 101 again calls the HSM DMA 102. The HSM DMA 102 responsively moves the ciphertext or plaintext obtained by the HSM CPU core 101 to the host 20 (e.g., into the data region HSM DFLASH of the FMC 108) via the HSM bus matrix 100 and the HSM external bus port 106. In case of the decrypted plaintext, the HSM CPU core 101 may directly move it out of the HSM SARM 104 or of the encryption/decryption engine module through the HSM bus matrix 100 in a predefined manner, or may check a corresponding result within the HSM 10. Subsequently, the HSM DMA 102 may move a result of the movement or checking of the HSM CPU core 101 to the host 20. Alternatively, the HSM CPU core 101 may again call the HSM DMA 102 in a predefined manner, which may then move the decrypted plaintext out of the HSM SARM 104 or of the encryption/decryption engine module through the HSM bus matrix 100, or may check a corresponding result within the HSM 10. Subsequently, the HSM DMA 102 may move a result of the movement or checking to the host 20 via the HSM external bus port 106.

After the HSM DMA 102 completes the movement of the ciphertext or plaintext obtained by the HSM CPU core, the HSM CPU core 101 writes it into the function register in the HSM IF 103, thereby setting an interrupt for the host 20.

Afterwards, in response to the interrupt, a program in the host CPU core 201 of the host 20 may inquire the result of the checking of the ciphertext or plaintext or the like that is moved by the HSM DMA 102 of the HSM 10, and may perform subsequent tasks based on a result of the inquiry.

Convenient, efficient, secure encryption/decryption can be achieved by the foregoing steps.

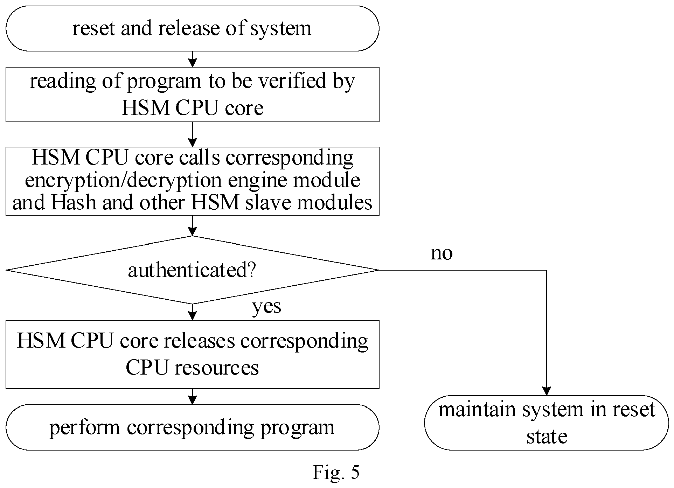

A secure booting process that can be implemented by the HSM 10 of the architecture according to the present embodiment as discussed above will be described in detail below with reference to Figs. 2, 5 and 11.

First of all, after the system of the HSM 10 is reset and released, a booting program (not shown) on the HSM CPU core 101 is run to read a program to be verified (not shown).

If the program to be verified is stored as ciphertext, then the HSM CPU core 101 retrieves a cryptographic key stored in the data region HSM DFLASH of the FMC 108, and then calls an appropriate one of the encryption/decryption engine modules to decrypt the ciphertext of the program to be verified. After that, it calls the hash module 105e to calculate a MAC (Message Authentication Code) or other checksum for the program to be verified.

Subsequently, the calculated checksum is compared with a checksum pre-stored in the data region HSM DFLASH of the FMC 108 (as a reference value). If the comparison is positive, the program to be verified is considered trustworthy, and the HSM CPU core 101 releases corresponding CPU resources for executing the program to be verified. If the comparison is negative, the program to be verified is considered unauthorized, and the HSM 10 drives the entire controller (MCU) system including the HSM 10 and the host 20 to remain in the reset state.

The architecture design for the HSM 10 of this embodiment is compliant with the Evita standard and allows a connection to be only established with the hardware interface between the HSM 10 and the host 20. Moreover, sensitive information is stored in the HSM 10 so as to be isolated from data on the host 20. This imparts greater information security protection power to the controller that is made up of the HSM 10 and the host 20 communicatively connected to the HSM 10. Further, by virtue of the use of the HSM DMA 102, the HSM CPU core 101 can be offloaded from heavy data movement, resulting in enhanced operating efficiency of the HSM CPU core 101.

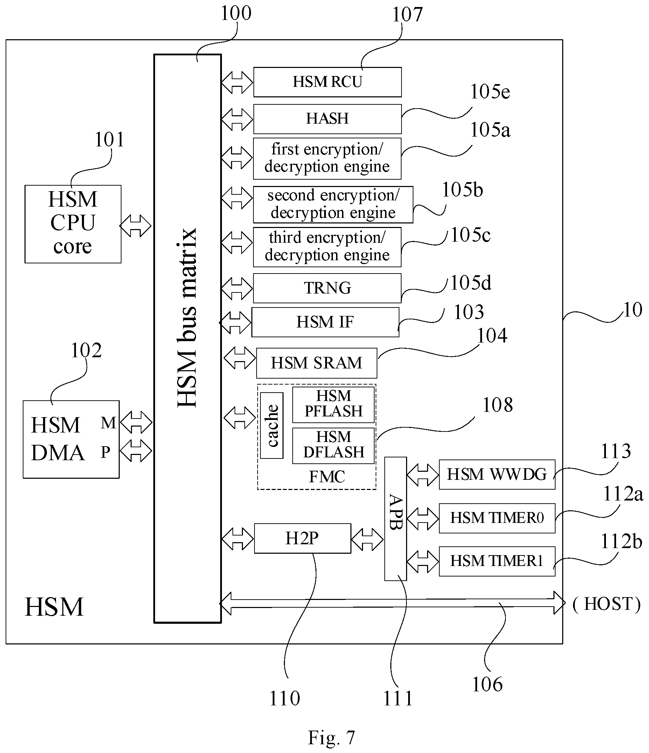

It will be understood that the foregoing various HSM slave modules are described for exemplary illustration purposes only and that it is in no way intended that the architecture design for the HSM 10 of this embodiment either necessarily includes all those HSM slave modules, or only includes all or some of those HSM slave modules. In architecture designs for the HSM 10 according to other embodiments of the present invention, depending on the required security performance of the product, other HSM slave modules may be added, or one or more of the HSM slave modules shown in Fig. 2 may be omitted. For example, only one or two of the encryption/decryption engine modules may be provided. For another example, the HSM 10 may further include at least one of at least one HSM timer (e.g., 112a-b of Fig. 7) and an HSM window watchdog (WWDG, e.g., 113 of Fig. 7), as additional HSM slave module(s).

Compared with the prior art, the HSM architecture design of present invention includes an HSM bus matrix and, all connected to the HSM bus matrix, a plurality of HSM master modules, an HSM SRAM and a plurality of first HSM slave modules. The HSM master modules include an HSM CPU core and an HSM DMA, and the first HSM slave modules include at least one encryption/decryption engine module. The HSM of the present invention complies with the Evita standard and stores sensitive information (e.g., cryptographic keys, information about user privacy, etc.) in the HSM SRAM or the like. This enables secure execution and storage, as well as data isolation between the HSM and an external host. That is, protection of sensitive information is achieved. Moreover, through configuring both the HSM DMA and the HSM CPU core as HSM master modules connected to the HSM bus matrix, data exchange is made possible between the HSM DMA and the host through the HSM external bus port, thereby offloading the HSM CPU core from heavy data movement and enhancing operating efficiency of the HSM CPU core.

### EMBODIMENT 2

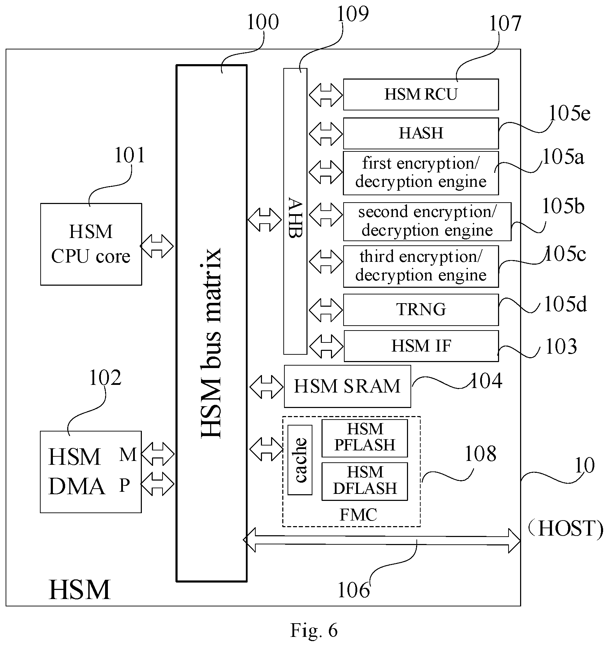

Referring to Fig. 6, another HSM 10 according to another embodiment of the present invention includes an HSM bus matrix 100, a plurality of HSM master modules, an HSM external bus port 106, an HSM SRAM 104 and a plurality of first HSM slave modules, which all support a first communication bus protocol. Compared with the architecture of the HSM 10 of the first embodiment, this embodiment adds a first communication bus 109 that supports the first communication bus protocol. This entails a dual-bus architecture design, in which the plurality of first HSM slave modules that support the first communication bus protocol may be directly connected to the other side of the first communication bus, and the HSM external bus port 106, HSM SRAM 104 and other modules may be directly connected to a slave side of the HSM bus matrix 100.

Optionally, the first HSM slave modules may be HSM slave modules, which are accessed at a low frequency and directly connected to the other side of the first communication bus. For example, they may include one or more of an HSM IF 103, a first encryption/decryption engine module 105a, a second encryption/decryption engine module 105b, a third encryption/decryption engine module 105c, a TRNG 105d, a hash module 105e and an HSM RCU 107.

As an example, according to this embodiment, the HSM master modules may include an HSM CPU core 101 and an HSM DMA 102, and the first HSM slave modules may include the HSM IF 103, the first encryption/decryption engine module 105a, the second encryption/decryption engine module 105b, the third encryption/decryption engine module 105c, the TRNG 105d, the hash module 105e and the HSM RCU 107. Both the HSM CPU core 101 and the HSM DMA 102 may be connected to a master side of the HSM bus matrix 100, and one side of the first communication bus 109 may be connected to the slave side of the HSM bus matrix 100. In this way, the frequently accessed modules, including the HSM external bus port 106, the HSM SRAM 104 and an FMC 108 (which is physically integrated in a host 20), are all directly connected to the slave side of the HSM bus matrix 100, while the less frequently accessed first HSM slave modules, including, for example, the HSM IF 103, the first encryption/decryption engine module 105a, the second encryption/decryption engine module 105b, the third encryption/decryption engine module 105c, the TRNG 105d, the hash module 105e and the HSM RCU 107, are all directly connected to the other side of the first communication bus 109.

Therefore, this embodiment entails a dual-bus architecture design, in which a single slave port on the slave side of the HSM bus matrix 100 may be assigned to some less frequently accessed modules (e.g., the plurality of first HSM slave modules) on the slave side of the HSM bus matrix 100. On the one hand, the HSM bus matrix 100 is allowed to have a reduced overall number of slave ports. As a result, the dual-bus design provided by the first communication bus 109 and the HSM bus matrix 100 is simpler than the single-bus design provided by the HSM bus matrix 100 of Fig. 2. This design can significantly reduce circuit complexity of the HSM bus matrix 100 and is easier to physically implement. On the other hand, since the first HSM slave modules commonly share the same single slave port of the HSM bus matrix 100 and will not compete with the HSM SRAM 104 and other modules for the use of their slave port(s), and because bus operations that the HSM CPU core 101 and the HSM DMA 102 perform on the plurality of first HSM slave modules sharing the same single slave port of the HSM bus matrix 100 are much fewer than bus operations that they perform on the HSM SRAM 104 and other modules, the influence of bus operations of the HSM CPU core 101 and the HSM DMA 102 requiring access to the first HSM slave modules (e.g., the encryption/decryption engine modules) on their bus operations requiring access to the FMC 108, HSM SRAM 104 and other modules can be mitigated, and operating efficiency of system software for the HSM 10 can be enhanced.

### EMBODIMENT 3

Referring to Fig. 7, an HSM 10 according to a further embodiment of the present invention includes an HSM bus matrix 100, a plurality of HSM master modules, an HSM SRAM 104, an HSM external bus port 106, a plurality of first HSM slave modules and a plurality of second HSM modules. Compared with the HSM 10 of the architecture according to the first embodiment, in the HSM 10 of this embodiment, the HSM bus matrix 100, the HSM SRAM 104, the HSM external bus port 106 and the HSM master modules all support a first communication bus protocol, while the HSM slave module are divided into two categories: the first HSM slave modules, which support the first communication bus protocol; and the second HSM slave modules, which support a second communication bus protocol that is different from the first communication bus protocol. Moreover, a first bus translation bridge 110 and a second communication bus 111 are added. The first HSM slave modules are all directly connected to a slave side of the HSM bus matrix 100, and one side of the first bus translation bridge 110 is connected to the slave side of the HSM bus matrix 100. The second HSM slave modules are connected to the other side of the first bus translation bridge 110.

As an example, in this embodiment, the first communication bus protocol may be, for example, AHB or any other suitable communication bus protocol, and the second communication bus protocol may be, for example, APB or any other suitable communication bus protocol. The HSM master modules may include an HSM CPU core 101 and an HSM DMA 102, and the first HSM slave modules may include an HSM IF 103, a first encryption/decryption engine module 105a, a second encryption/decryption engine module 105b, a third encryption/decryption engine module 105c, a TRNG 105d, a hash module 105e and an HSM RCU 107. The second HSM slave modules may include an HSM WWDG 113 and at least one HSM timer 112a-112b. Both the HSM CPU core 101 and the HSM DMA 102 may be connected to a master side of the HSM bus matrix 100. The first HSM slave modules, including the HSM IF 103, the first encryption/decryption engine module 105a, the second encryption/decryption engine module 105b, the third encryption/decryption engine module 105c, the TRNG 105d, the hash module 105e and the HSM RCU 107, as well as, the HSM external bus port 106, the HSM SRAM 104, an FMC 108 (which is physically integrated in a host 20) and the first bus bridge 110, may be connected at one side to the slave side of the HSM bus matrix 100. One side of the second communication bus 111 may be connected to the other side of the first bus bridge 110, and the second HSM slave modules, including the HSM WWDG 113, the HSM timer0 112a and the HSM timer1 112b may be all connected to the other side of the second communication bus 111.

The first bus bridge 110 is configured for translation between the first and second communication bus protocols. The HSM WWDG 113 is configured to monitor operation of the HSM CPU core 101. The HSM timer0 112a and the HSM timer1 112b are configured to provide clocks required by the HSM slave and master modules.

According to this embodiment, through connecting the second HSM slave modules that support the second communication bus protocol to the second communication bus 111 and connecting the second communication bus 111 to the first bus bridge 110, a single slave port on the slave side of the HSM bus matrix 100 is assigned to the second HSM slave modules that support the second communication bus protocol. First, this makes the HSM 10 more powerful and compatible with the two different communication bus protocols. Second, adding the plurality of second HSM slave modules that support the second communication bus protocol does not lead to a significant increase in the overall number of slave ports required in the HSM bus matrix 100, avoiding increasing circuit complexity of the HSM bus matrix 100 and making the design easier to physically implement. Third, since the second HSM slave modules commonly share the same single slave port of the HSM bus matrix 100 and will not compete with the HSM SRAM 104 and other modules for the use of their slave port(s), and because bus operations that the HSM CPU core 101 and the HSM DMA 102 perform on the plurality of second HSM slave modules are much fewer than bus operations that they perform on the HSM SRAM 104 and other modules, the influence of bus operations of the HSM CPU core 101 and the HSM DMA 102 requiring access to the second HSM slave modules on their bus operations requiring access to the HSM SRAM 104 and other modules can be mitigated, and operating efficiency of system software for the HSM 10 can be enhanced.

### EMBODIMENT 4

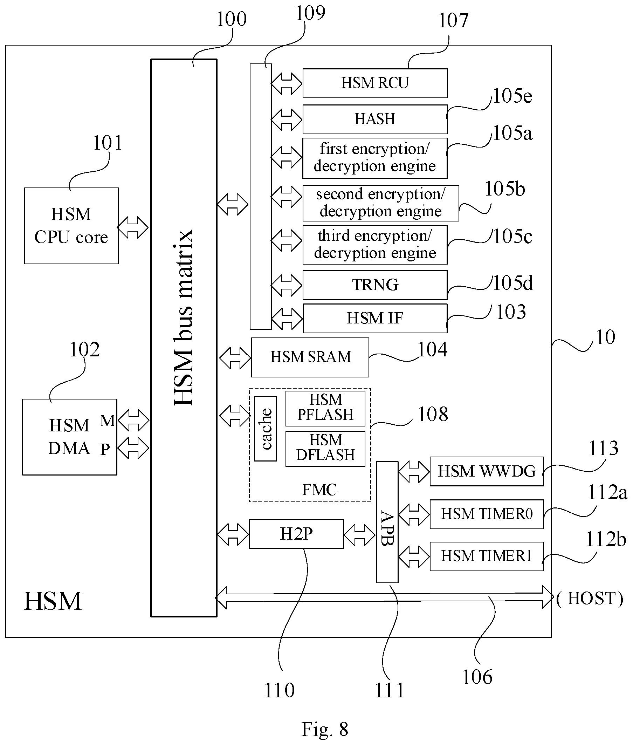

Referring to Fig. 8, an HSM 10 according to a further embodiment of the present invention combines the advantages of both the HSMs 10 of the architectures according to the second and third embodiments. Specifically, in addition to an HSM bus matrix 100, a plurality of HSM master modules, an HSM external bus port 106, an HSM SRAM 104 and a plurality of first HSM slave modules supporting a first communication bus protocol and a plurality of second HSM slave modules supporting a second communication bus protocol, it also includes a first communication bus 109, a first bus bridge 110 and a second communication bus 111. In this embodiment, the HSM bus matrix 100, the HSM external bus port 106, the HSM SRAM 104, an FMC 108 (which is physically integrated in a host 20) and the HSM master modules all support the first communication bus protocol, and the second communication bus protocol is different from the first communication bus protocol. Moreover, a first bus translation bridge 110 and the second communication bus 111 are added. One side of the first communication bus 109, one side of the first bus bridge 110 and modules including the HSM external bus port 106, the HSM SRAM 104 and the FMC 108 are all directly connected to a slave side of the HSM bus matrix 100, and the first HSM slave modules are connected to the other side of the first communication bus 109. One side of the second communication bus 111 is connected to the other side of the first bus bridge 110, and the second HSM slave modules are connected to the other side of the second communication bus 111.

As an example, in this embodiment, the first communication bus protocol may be, for example, AHB or any other suitable communication bus protocol, and the second communication bus protocol may be, for example, APB or any other suitable communication bus protocol. The HSM master modules may include an HSM CPU core 101 and an HSM DMA 102, and the first HSM slave modules may include an HSM IF 103, a first encryption/decryption engine module 105a, a second encryption/decryption engine module 105b, a third encryption/decryption engine module 105c, a TRNG 105d, a hash module 105e and an HSM RCU 107. The second HSM slave modules may include an HSM WWDG 113 and at least one of the HSM timer0 112a and the HSM timer1 112b. Both the HSM CPU core 101 and the HSM DMA 102 may be connected to a master side of the HSM bus matrix 100. One side of the first communication bus 109, one side of the first bus bridge 110, the HSM SRAM 104, the HSM external bus port 106 and the FMC 108 may be all located on the slave side of the HSM bus matrix 100 and directly connected to the HSM bus matrix 100. The first HSM slave modules, including the HSM IF 103, the first encryption/decryption engine module 105a, the second encryption/decryption engine module 105b, the third encryption/decryption engine module 105c, the TRNG 105d, the hash module 105e and the HSM RCU 107, may be all connected to the other side of the first communication bus 109. One side of the second communication bus 111 may be connected to the other side of the first bus bridge 110. The second HSM slave modules, including the HSM WWDG 113, the HSM timer0 112a and the HSM timer1 112b may be all connected to the other side of the second communication bus 111.

According to this embodiment, through connecting the plurality of less frequently accessed first HSM slave modules that support the first communication bus protocol to the first communication bus 109, connecting the second HSM slave modules that support the second communication bus protocol to the second communication bus 111 and connecting the second communication bus 111 to the first bus bridge 110, a dual-bus architecture is realized, in which the first HSM slave modules commonly share only a single port of the HSM bus matrix 100, and the second HSM slave modules commonly share only another single port of the HSM bus matrix 100. First, this makes the HSM more powerful and compatible with the two different communication bus protocols. The first communication bus, the first bus bridge and the second communication bus are arranged to minimize the overall number of slave ports of the HSM bus matrix 100 required. This reduces circuit complexity of the HSM bus matrix 100 and makes the design easier to physically implement. Third, since the first and second HSM slave modules do not compete with the HSM SRAM 104 and other modules for the use of their slave port(s) of the HSM bus matrix 100, and because bus operations that the HSM CPU core 101 and the HSM DMA 102 perform on the first and second HSM slave modules are much fewer than bus operations that they perform on the HSM SRAM 104 and other modules, the influence of bus operations of the HSM CPU core 101 and the HSM DMA 102 requiring access to the first and second HSM slave modules on their bus operations requiring access to the HSM SRAM 104 and other modules can be mitigated, and operating efficiency of system software for the HSM 10 can be enhanced.

### EMBODIMENT 5

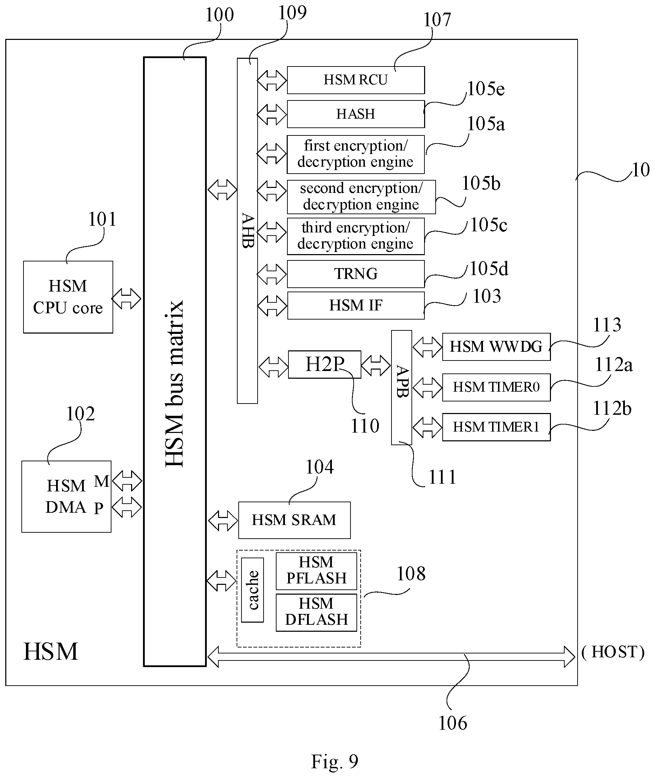

Referring to Fig. 9, an HSM 10 according to a further embodiment of the present invention includes an HSM bus matrix 100, a plurality of HSM master modules, an HSM SRAM 104, an HSM external bus port 106, a plurality of first HSM slave modules that support a first communication bus protocol, a plurality of second HSM slave modules that support a second communication bus protocol, a first communication bus 109, a first bus bridge 110 and a second communication bus 111. The HSM bus matrix 100, the HSM SRAM 104, the HSM external bus port 106, an FMC 108 (which is physically integrated in a host 20) and the HSM master modules all support the first communication bus protocol. The HSM master modules include an HSM CPU core 101 and an HSM DMA 102. The first HSM slave modules are less frequently accessed than the HSM SRAM 104 and other modules and support the first communication bus protocol. For example, they may include an HSM IF 103, a first encryption/decryption engine module 105a, a second encryption/decryption engine module 105b, a third encryption/decryption engine module 105c, a TRNG 105d, a hash module 105e and an HSM RCU 107. The second HSM slave modules support the second communication bus protocol and may include, for example, an HSM WWDG 113 and at least one of the HSM timer0 112a and the HSM timer1 112b.

The HSM 10 of this embodiment differs from the HSM 10 of the fourth embodiment in architecture in that one side of the first bus bridge 110 is connected to the other side of the first communication bus 109 in accordance with this embodiment. All the other modules in the HSM 10 of this embodiment are configured in the same way as in the fourth embodiment and, therefore, need not be described in further detail herein.

Compared with the HSM 10 of the fourth embodiment, the HSM bus matrix 100 in the HSM 10 of this embodiment is allowed to have even fewer slave ports and hence an even simpler circuit design.

### EMBODIMENT 6

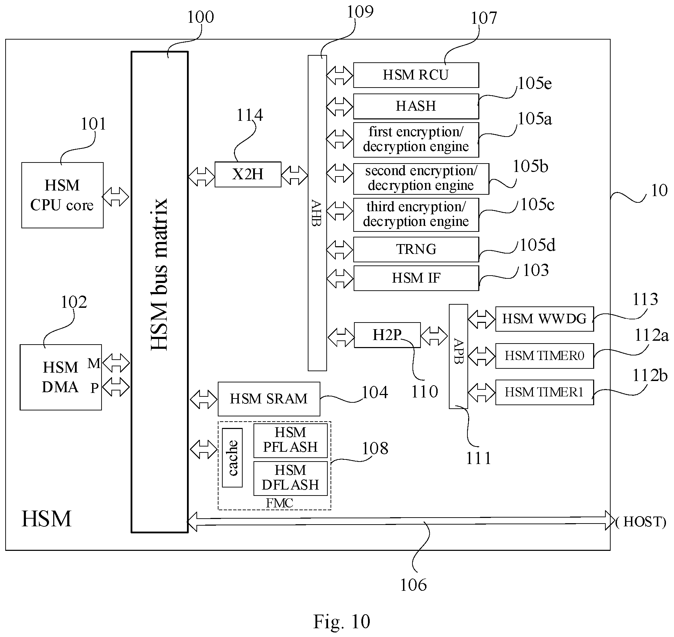

Referring to Fig. 10, an HSM 10 according to a further embodiment of the present invention includes an HSM bus matrix 100, a plurality of HSM master modules, an HSM SRAM 104, an HSM external bus port 106, a plurality of first HSM slave modules that support a first communication bus protocol, a plurality of second HSM slave modules that support a second communication bus protocol, a first communication bus 109, a first bus bridge 110 and a second communication bus 111. The HSM master modules include an HSM CPU core 101 and an HSM DMA 102. The HSM external bus port 106, the HSM SRAM 104 and an FMC 108 (which is physically integrated in a host 20) are frequently accessed modules on a slave side of the HSM bus matrix 100. The first HSM slave modules are less frequently accessed than the HSM SRAM 104 and other modules and support the first communication bus protocol. For example, they may include an HSM IF 103, a first encryption/decryption engine module 105a, a second encryption/decryption engine module 105b, a third encryption/decryption engine module 105c, a TRNG 105d, a hash module 105e and an HSM RCU 107. The second HSM slave modules support the second communication bus protocol and may include, for example, an HSM WWDG 113 and at least one of the HSM timer0 112a and the HSM timer1 112b.

The HSM 10 of this embodiment differs from the HSM 10 of the fifth embodiment in architecture in that the HSM bus matrix 100, the HSM master modules, the HSM external bus port 106, the HSM SRAM 104 and the FMC 108 in this embodiment all support a third communication bus protocol, and in that the HSM 10 of this embodiment further includes a second bus bridge 114. One side of the second bus bridge 114, the HSM external bus port 106, the HSM SRAM 104 and the FMC 108 are all directly connected to the slave side of the HSM bus matrix 100, and one side of the first communication bus 109 is connected to the other side of the second bus bridge 114. The first HSM slave modules are connected to the other side of the first communication bus 109. The first, second and third communication bus protocols are different from one another. The second bus bridge 114 is configured for translation between the third and first communication bus protocols.

All the other modules in the HSM 10 of this embodiment are configured in the same way as in the fifth embodiment and, therefore, need not be described in further detail herein.

As an example, the first communication bus protocol may be, for example, AHB or any other suitable communication bus protocol, the second communication bus protocol may be, for example, APB or any other suitable communication bus protocol, and the third communication bus protocol may be, for example, AXI or any other suitable communication bus protocol.

By means of inter-protocol translation by the first and second bus translation bridges, the HSM of this embodiment is compatible with the three different communication bus protocols and is therefore more powerful.

### EMBODIMENT 7

Referring to Fig. 11, in an embodiment of the present invention, there is provided a controller, which may include a host 20 and the HSM 10 as discussed in any of the foregoing embodiments.

In one example, referring to Fig. 11, the HSM 10 and the host 20 may be integrated in the same chip. In this way, the controller may be provided as an integrated chip (i.e., a system-on-chip (SoC)). The host 20 includes a host bus matrix 200, a plurality of host master modules and plurality of host slave modules. The host master modules are connected to a master side of the host bus matrix 200 and include at least one host CPU core 201 and other host master modules 202 including the HSM 10 and a host DAM. The host slave modules are coupled to a slave side of the host bus matrix 200 and include a host SRAM 203 and the like. The host SRAM 203 is configured to store data relating to the host 20, and each host CPU core 201 is configured to process the data relating to the host 20 and configure corresponding ones of the host master and slave modules.

As the controller of this embodiment employs the inventive HSM 10, it is of a secure, efficient architecture, which provides data isolation between the HSM 10 and the host 20. The HSM 10 can access almost all the resources in the host 20, including various memories and peripherals, while the host 20 cannot access sensitive information stored in the HSM 10. The controller can be used in a control system of any suitable electronic product.

For example, the controller of this embodiment may be used as an automotive electronic control unit (ECU). Since the automotive ECU employs the inventive HSM 10, its sensitive information (e.g., cryptographic keys, information about user privacy, etc.) can be stored in the HSM so as to be isolated from data on a host. In this way, sensitive data in the automotive ECU can be protected from potential threats and attacks, thus guaranteeing driving safety of the vehicle, for example.

The description presented above is merely that of a few preferred embodiments of the present invention and is not intended to limit the scope thereof in any sense. Any and all changes and modifications made by those of ordinary skill in the art based on the above teachings fall within the scope as defined in the appended claims.

## Claims

1. A hardware security module (HSM) (10), comprising:
an HSM bus matrix (100);
a plurality of HSM master modules connected to a master side of the HSM bus matrix (100) and comprising an HSM central processing unit (CPU) core (101) and an HSM direct memory access (DMA) (102), the HSM DMA (102) configured for data movement within the HSM (10) and data movement between the HSM (10) and a corresponding module in a host (20), the HSM CPU core (101) configured to process associated data and configure the HSM DMA (102);
an HSM static random-access memory (SRAM) (104) and a plurality of first HSM slave modules, which are all connected to a slave side of the HSM bus matrix (100), the HSM SRAM (104) configured to store sensitive information, the first HSM slave modules comprising at least one encryption/decryption engine module (105a, 105b, 105c) each configured to provide a respective encryption/decryption algorithm; and
an HSM external bus port (106), one side of the HSM external bus port (106) is connected to the slave side of the HSM bus matrix (100), and the other side of the HSM external bus port (106) is connected to a master side of a host bus matrix (200) of the host (20), wherein both the HSM CPU core (101) and the HSM DMA (102) act as host master modules of the host (20), which are capable of accessing corresponding resources in the host (20) via the HSM bus matrix and the HSM external bus port (106).

2. The HSM (10) of claim 1, wherein the HSM DMA (102) comprises an HSM DMA controller and an HSM DMA arbiter, the HSM DMA (102) controller sharing the HSM bus matrix (100) with the HSM CPU core (101) and having a plurality of channels, each of the channels dedicated to management of one or more requests for a memory access to the HSM (10), the HSM DMA (102) arbiter configured for priority management of the requests for the memory access.

3. The HSM (10) of claim 1 or 2, wherein permitted access to the HSM bus matrix (100) is determined by round-robin scheduling, and when the HSM DMA (102) and the HSM CPU core (101) have the same destination for the memory access, the HSM DMA (102) disrupts access of the HSM CPU core (101) to the HSM bus matrix (100) in appropriate bus cycles.

4. The HSM (10) of claim 1, wherein the host (20) comprises a flash memory controller (FMC) (108), one side of the FMC (108) is connected to the slave side of the HSM bus matrix (100), and the other side of the FMC (108) is connected to a slave side of the host bus matrix (200), the FMC (108) having a dedicated flash memory area assigned to the HSM (10) and configured for non-volatile storage of the sensitive information or running of security code.

5. The HSM (10) of claim 4, wherein the dedicated flash memory area comprises at least one of a program region, a data region and a cache region.

6. The HSM (10) of claim 1, wherein when an interrupt for the HSM (10) is set, the HSM DMA (102) moves data to be processed from the host (20) to the HSM SRAM (104) or to a corresponding one of the encryption/decryption engine module(s) (105a, 105b, 105c) via the HSM external bus port (106); during the movement of the data to be processed, the HSM CPU core (101) performs other transactions; after the movement of the data to be processed is completed, the HSM CPU core (101) activates the encryption/decryption engine module (105a, 105b, 105c) and thereby obtains encrypted ciphertext or decrypted plaintext, followed by movement of the ciphertext or plaintext by the HSM DMA (102) to the host (20) via the HSM external bus port (106);
optionally, after the movement of the ciphertext or plaintext is completed, the HSM CPU core (101) sets the interrupt for the host (20).

7. The HSM (10) of any one of claims 1 to 6, wherein the plurality of first HSM slave modules further comprise a hardware interface module, which is connected to the slave side of the host bus matrix (200) and configured for exchange of associated information between the HSM (10) and the host (20);
optionally wherein the hardware interface module contains a function register configured to exchange the associated information between the HSM (10) and the host (20) and/or to set interrupts for the HSM (10) and the host (20).

8. The HSM (10) of any one of claims 1 to 7, wherein the HSM (10) is implemented as a whole, as a power domain, wherein when the entire HSM is powered down, the HSM (10) enters a low power mode at the lowest power level.

9. The HSM (10) of claim 8, wherein the plurality of first HSM slave modules further comprise an HSM reset control unit (RCU) module (107) for controlling clocks and reset of the first HSM slave modules and the HSM master modules, the HSM RCU module (107) comprising a clock gating unit configured to shut down, when the HSM (10) is normally supplied with power, depending on various power needs, at least one of the other modules in the HSM (10) rather than the HSM CPU core (101), thereby creating low power modes at different power levels;
optionally wherein the clock gating unit comprises a clock driver circuit and a plurality of cascaded gating circuits, the clock driver circuit comprising an input terminal coupled to a system clock signal provided by the host (20), the clock driver circuit comprising an output terminal coupled to an input terminal of a first gating circuit of the gating circuits, a first output terminal of the first gating circuit coupled to a power supply terminal of the HSM CPU core (101), a second output terminal of the first gating circuit coupled to an output terminal of a second gating circuit of the gating circuits, each of the second gating circuit and any succeeding one of the gating circuits, a first output terminal of a preceding one of the gating circuits coupled to an input terminal of an immediately succeeding one of the gating circuits, the second output terminal and any remaining output terminals of each gating circuit coupled to a power supply terminal of a respective HSM peripheral (115), the first gating circuit to a last gating circuit each comprising an enable terminal coupled to a respective different internal clock signal in the HSM (10).

10. The HSM (10) of claim 8, wherein the host (20) is provided therein with a tri-state buffer and a power manage unit (PMU), the tri-state buffer comprising an input terminal coupled to a power supply for supplying power to the HSM (10), the tri-state buffer comprising an output terminal coupled to a system power supply terminal of the HSM (10), the tri-state buffer comprising an enable terminal coupled to an output terminal of the PMU, the tri-state buffer, when enabled by the PMU, allowing the power supply to normally supply power to the entire HSM, when the tri-state buffer is disabled by the PMU, the tri-state buffer allowing the entire HSM to be shut down.

11. The HSM (10) of any one of claims 1 to 10, wherein the HSM bus matrix (100) supports a first communication bus protocol, and wherein the HSM (10) further comprises:
a first communication bus (109), one side of which is connected to the slave side of the HSM bus matrix (100), wherein the first HSM slave modules all support the first communication bus protocol and are all connected to the other side of the first communication bus (109), and/or
the HSM (10) further comprises:
a first bus translation bridge (110), one side of which is connected to the slave side of the HSM bus matrix (100) or to the other side of a first communication bus (109), and which is configured for translation between a second communication bus protocol and the first communication bus protocol; and
a second communication bus (111) supporting the second communication bus protocol, one side of the second communication bus (111) is connected to the other side of the first bus translation bridge, wherein a plurality of second HSM slave modules all support the second communication bus protocol and are all connected to the other side of the second communication bus (111),
wherein the second communication bus protocol is different from the first communication bus protocol, and the HSM SRAM (104) is directly connected to the slave side of the HSM bus matrix (100).

12. The HSM (10) of any one of claims 1 to 10, wherein the HSM bus matrix (100) supports a third communication bus protocol, and wherein the HSM (10) further comprises:
a second bus translation bridge (114), one side of the second bus translation bridge is connected to the slave side of the HSM bus matrix (100), and which is configured for translation between a first communication bus protocol and the third communication bus protocol;
a first communication bus (109) supporting the first communication bus protocol, one side of the first communication bus (109) is connected to the other side of a first bus translation bridge, wherein the first HSM slave modules all support the first communication bus protocol and are all connected to the other side of the first communication bus (109);
the first bus translation bridge, one side of the first bus translation bridge is connected to the other side of the first communication bus (109), and which is configured for translation between the first communication bus protocol and a second communication bus protocol; and
a second communication bus (111) supporting the second communication bus protocol, one side of the second communication bus (111) is connected to the other side of the first bus translation bridge, wherein a plurality of second HSM slave modules all support the second communication bus protocol and are all connected to the other side of the second communication bus (111),
wherein the first communication bus protocol, the second communication bus protocol and the third communication bus protocol are different from one another, and the HSM SRAM (104) is directly connected to the slave side of the HSM bus matrix (100).

13. The HSM (10) of claim 11 or 12, wherein the plurality of first HSM slave modules further include at least one of:
a true random number generator module (105d) for generating various cryptographic keys required by encryption and decryption;
a hash module (105e) for utilizing a hash algorithm to assist in encryption and decryption calculations performed by an appropriate one of the encryption/decryption engine module(s) (105a, 105b, 105c); and/or
wherein the plurality of second HSM slave modules comprises at least one of:
at least one HSM timer (112a, 112b) for providing clocks required by the HSM slave and master modules; and
an HSM window watchdog (113) for monitoring operation of the HSM CPU core (101).

14. A controller, comprising a host (20) and the HSM (10) of any one of claims 1 to 13, wherein the HSM (10) and the host (20) are integrated in a single chip.

15. The controller of claim 14, wherein the host comprises a host bus matrix (200), a plurality of host master modules and a plurality of host slave modules, the plurality of host master modules connected to a master side of the host bus matrix (200) and comprising a host central processing unit (CPU) core (201) and the HSM (10), the plurality of host slave modules connected to a slave side of the host bus matrix (200) and including a host static random-access memory (SRAM) (203) for storing data, the host CPU core (201) configured to process associated data and configure the host master modules and the host slave modules;
optionally wherein the controller is an automotive electronic control unit (ECU).
